(19) Europäisches Patentamt
European Patent Office
Office européen des brevets

(11) **EP 2 994 774 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **14716544.3**

(22) Anmeldetag: **04.04.2014**

(51) Int Cl.:
***G01S 15/32*** *(2006.01)*   ***G01S 15/93*** *(2020.01)*
***G01S 15/10*** *(2006.01)*

(86) Internationale Anmeldenummer:
**PCT/EP2014/056846**

(87) Internationale Veröffentlichungsnummer:
**WO 2014/180609 (13.11.2014 Gazette 2014/46)**

(54) **VERFAHREN ZUR ÜBERWACHUNG EINES UMFELDS EINER SICH INSBESONDERE BEWEGENDEN EINRICHTUNG**

METHOD FOR MONITORING THE SURROUNDINGS OF A DEVICE, PARTICULARLY ONE THAT IS IN MOTION

PROCÉDÉ DE SURVEILLANCE D'UN ENVIRONNEMENT D'UN DISPOSITIF, EN PARTICULIER MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2013 DE 102013008235**
**27.06.2013 EP 13174087**

(43) Veröffentlichungstag der Anmeldung:
**16.03.2016 Patentblatt 2016/11**

(73) Patentinhaber: **Elmos Semiconductor SE**
**44227 Dortmund (DE)**

(72) Erfinder: **SPIEGEL, Egbert**
**44227 Dortmund (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1-102010 033 210      DE-A1-102010 033 383**
**DE-A1-102011 110 170      US-A1- 2009 135 672**

**Beschreibung**

Die Erfindung betrifft ein Verfahren zur gemeinsamen Überwachung des Nah- und des Fernbereichs des Umfelds einer sich insbesondere bewegenden Einrichtung, z. B. eines Fahrzeugs, mittels Ultraschall hinsichtlich der Existenz von Objekten im Umfeld und/oder von in das Umfeld gelangenden Objekten. Insbesondere betrifft die Erfindung ein Verfahren zur Messung eines Abstands mittels Ultraschall.

Für viele Anwendungen ist die Detektion des Abstands eines Objekts zu einer Einrichtung eine zentrale Aufgabe. Eine beispielhafte Anwendung ist die Detektion der Abstände eines Kraftfahrzeugs von Hindernissen bei der Umfeldüberwachung, insbesondere beim Einparken oder aber auch während der Fahrt (Toter-Winkel-Überwachung). Hierbei ergeben sich widerstrebende Anforderungen. Zum einen soll eine möglichst große Reichweite erzielt werden, zum anderen soll die Überwachung im Nahbereich der Einheit möglich und zuverlässig sein.

Ein typisches Ultraschallsystem aus dem Stand der Technik umfasst dabei mindestens einen Sender, der ein Ultraschallsignal, typischerweise als aufeinanderfolgende Ultraschallbursts, aussendet. Diese werden durch das Objekt reflektiert. Ein Empfänger detektiert diese reflektierten Ultraschallburstsignale und wandelt sie in ein Empfängerausgangssignal um. Eine Analyseeinheit wertet das oder die Empfängerausgangssignale aus und gibt die Daten der gemessenen Reflektionen nach außen zur Weiterverarbeitung weiter. Dies geschieht typischerweise über einen Datenbus oder als analoges Signal.

Für weiter entfernte Objekte verschwindet das reflektierte Signal mit zunehmender Entfernung im Rauschuntergrund. Für eine sichere Detektion ist es daher sinnvoll, durch ein spektrales Spreizverfahren den Ultraschallburst in seiner spektralen Form und Breite so zu modifizieren, dass er sich bei einer Korrelation des Empfangssignals mit dem Sendesignal optimal aus dem Rauschuntergrund extrahieren lässt. Dies geschieht z. B. durch die Verwendung von Spreiz-Kodes, mit denen der Ultraschallburst nach einem jeweils speziellen Verfahren moduliert wird.

Die Erfindung befasst sich daher mit einem Verfahren zur Messung des Abstands zwischen einem Sensorsystem und einem oder mehreren Objekten mittels Ultraschall, das diese Bedingungen erfüllen.

Ein Problem der Kodierung ist, dass der Ultraschallsendeburst eine gewisse Mindestlänge aufweisen muss, damit mittels Korrelation noch zuverlässige Ergebnisse (Echodetektionen) erzielbar sind. Da es kostengünstig ist, als Empfänger und als Sender denselben Transducer zu verwenden, muss bei diesem, damit er empfangsbereit ist, aber nicht nur die Aussendung des Ultraschallsendebursts abgeschlossen, sondern der Transducer auch noch ausgeschwungen sein. Hier sei der Vollständigkeit halber erwähnt, dass im Folgenden mit Transducer immer ein kombinierter Sender/Empfänger gemeint ist. In der Zeit des Sendens und Ausschwingens kann der Transducer nichts empfangen. Somit führt ein langer z.B. komplexer (Spreiz-)Kode zu einem langen und komplexen Ultraschallsendeburst und damit zu einer längeren Zeit, in der der Transducer sendet, aber eben noch keinen Empfang hat. Somit entsteht ein Blindbereich unmittelbar vor dem Sensor, in dem Objekte nicht sicher erkannt werden können. Grundsätzlich ist es möglich, einen zweiten Empfänger zu nutzen, was aber aufwendiger wäre.

Aus DE-A-10 2010 033 210 ist es bekannt, dass es daher sinnvoll sein kann, in Abhängigkeit vom geschätzten Abstand des zu messenden Objekts unterschiedliche Kodes oder, allgemeiner gesagt, unterschiedliche Ultraschallburstsignal-Paare zu verwenden.

Ein Verfahren zur Auswertung der Reflektionssignale eines Ultraschallsensors ist ferner aus DE-A-10 2011 110 170 bekannt.

In DE-A-10 2010 033 383 sind ein Verfahren und eine Vorrichtung zur Generierung eines Messsignals zur Fahrzeugumfelderfassung beschrieben. Dabei wird vor der eigentlichen Ermittlung von Abständen zu erkannten Hindernissen, ein uncodiertes erstes Messsignal ohne Modulation, also mit einer sehr kurzen Sendedauer ausgesendet. Dadurch ist der Messbereich der Fahrzeugumfelderfassung durch die minimale Untergrenze und die maximale Obergrenze maximal geöffnet. Die Störsicherheit ist jedoch minimal, wodurch die Abstände zu erkannten Hindernissen nur geschätzt werden können. In Reaktion auf das ausgesendete erste Messsignal wird ein Echosignal empfangen, welches Störsignalanteile und Nutzsignalanteile aufweist. Aus diesen Informationen kann berechnet werden, ob bzw. wie stark ein nachfolgendes Messsignal codiert und/oder moduliert werden soll, um Hindernisse und deren Abstand zum Fahrzeug sicher zu erkennen und um externe Störungen mit einer möglichst großen Sicherheit herauszufiltern. Wird beispielsweise ein großer Abstand zu einem erkannten Hinderniss geschätzt und eine stark gestörte Umgebung erkannt, dann kann ein stark codiertes und/oder moduliertes Messsignal mit einer langen Sendedauer erzeugt und ausgesendet werden. Die Untergrenze des Messbereichs wird dadurch schlechter, weil größer eingestellt, und die Störsicherheit wird jedoch verbessert. Bei kleinen Abständen zu einem erkannten Hindernis kann beispielsweise keine oder nur eine geringe Codierung und/oder Modulation des Messsignals erfolgen, um die Sendedauer des Messsignals kurz zu halten.

Schließlich ist ein weiteres Verfahren zur Überwachung des Umfelds einer Einrichtung mittels Ultraschall hinsichtlich der Existenz von Objekten im Umfeld der Einrichtung in US-A-2009/0135672 beschrieben.

Ein Problem ergibt sich jedoch bei Überreichweiten. Wird also versucht, mit einem ersten Ultraschallburst den Nahbereich in einer ersten Messphase zu vermessen, und anschließend mit einem zweiten Ultraschallburst den Fernbereich in einer zweiten zeitlichen Messphase, so kann es vorkommen, dass ein großes, relativ weit entferntes Objekt ein Echo des ersten Ultraschallbursts liefert, und zwar in nicht beabsichtigter Weise in der zweiten Messphase, die dem zweiten Ultraschallburst zugeordnet ist. Dieses Problem kann umgangen werden, wenn die Kodes des ersten und zweiten Ultraschallbursts nicht miteinander korrelieren.

Diese Anforderung der Nichtkorrelation widerspricht aber der im Folgenden beschriebenen Forderung nach Robustheit gegenüber dem Dopplereffekt (Dopplerrobustheit).

Ein in der Ultraschallmesstechnik besonders relevantes Problem ist die auftretende Dopplerverzerrung des reflektierten Ultraschallbursts durch eine mögliche Bewegung des reflektierenden Objekts in Richtung auf den Empfänger und/oder Sender zu oder von diesen weg. Diese Dopplerverzerrung führt im einfachsten Fall zu einer zeitlichen Kompression oder Dehnung des Ultraschallbursts. Da die Schallgeschwindigkeit um einen Faktor von grob $10^6$ kleiner ist als die Lichtgeschwindigkeit, ist dies ein dominierendes Problem.

Daher kommen im Falle einer Ultraschallabstandsmessung nur solche Kodes und Modulationsverfahren in Frage, die bei einer zeitlichen Kompression oder Streckung des ursprünglichen Sendesignals immer noch eine gute Korrelationsfunktion mit dem ursprünglichen Sendesignal liefern, die einem Dirac-Puls typischerweise nahe kommen soll. Dabei müssen die Kodes gegenüber solchen aus der Radartechnik auch hinsichtlich Verwirbelungen des Medium, also der Luft, robust sein.

Aufgabe der Erfindung ist es, ein Verfahren zur gemeinsamen Überwachung des Nah- und des Fernbereichs des Umfelds einer sich insbesondere bewegenden Einrichtung, z. B. eines Fahrzeugs, mittels Ultraschall hinsichtlich der Existenz von Objekten im Umfeld und/oder von in das Umfeld gelangenden Objekten zu schaffen, das sowohl im Nahbereich als auch im Fernbereich zuverlässig arbeitet.

Zur Lösung dieser Aufgabe wird mit der Erfindung ein Verfahren gemäß Anspruch 1 zur gemeinsamen Überwachung des Nah- und des Fernbereichs des Umfelds einer sich insbesondere bewegenden Einrichtung wie z. B. eines Fahrzeugs mittels Ultraschall hinsichtlich der Existenz von Objekten im Umfeld und/oder von in das Umfeld gelangenden Objekten vorgeschlagen. Einzelne Ausgestaltungen der Erfindung sind Gegenstand der Unteransprüche.

Nach dem erfindungsgemäßen Konzept wird derart verfahren, dass unterschiedliche Burstsignale zur Überwachung unterschiedlicher Bereiche des Umfeldes der Einrichtung verwendet werden. Dabei ist mit Vorteil vorgesehen, dass die beiden Burstsignale unterschiedlich kodiert sind, wobei es sich als besonders zweckmäßig erwiesen hat, wenn das Burstsignal, das in einem bestimmten Messintervall ausgesendet wird, nicht kodiert ist und insbesondere als kurzes Burstsignal ausgebildet ist, während das Burstsignal, das im sich anschließenden Messintervall ausgesendet wird, ein energiereiches langes Burstsignal ist, das kodiert ist. Durch die Tatsache, dass das kürzere erste Burstsignal nicht kodiert und das längere zweite Burstsignal kodiert ist, ist es möglich, selbst bei einer Überlagerung des Empfangs der jeweiligen Reflektionssignale in der Empfangsphase eines einzigen Messintervalls die beiden Reflektionen noch voneinander unterscheiden zu können, da nämlich die beiden Burstsignale nicht bzw. im Wesentlichen nicht miteinander korrelieren, insoweit also orthogonal zueinander sind. Diese Orthogonalität der Burstsignale in Form eines kurzen ersten Burstsignals, das unmoduliert, d. h. nicht kodiert ist, und eines langen zweiten Burstsignals, das kodiert ist, sowie die Sendereihenfolge dieses Signalpaares (zuerst das erste und danach das zweite Burstsignal) machen das Wesen der Erfindung aus.

Von Vorteil für die Erfindung ist eine Dopplerrobustheit der Burstsignale, also deren Unempfindlichkeit gegenüber Dopplereffekten. Das erste Burstsignal ist aufgrund seiner kurzen Länge von weniger als zehn oder weniger als acht oder weniger als sechs oder weniger als vier Einzelpulsen dopplerrobust. Das zweite längere Burstsignal ist ebenfalls dopplerrobust. Diesbezüglich wird erfindungsgemäß ein Poly-Phasen-Kode oder ein P4-Kode mit jeweils einer Phasensprungweite von kleiner als 90° verwendet. Der Vorteil der erfindungsgemäßen Kombination unterschiedlicher Burstsignale und insbesondere der erfindungsgemäßen Kombination eines nichtkodierten kurzen Burstsignals, insbesondere eines Einzelburstpulses, mit einem kodierten längeren Burstsignal ist in folgenden Eigenschaften zu sehen:

- Der Blindbereich, der durch das lange Burstsignal entsteht, wird durch das kurze Burstsignal und insbesondere durch das Einzelpulsverfahren überbrückt.

- "Überreichweitenechos" des kurzen Burstsignals und insbesondere des Einzelpulses können in einem Korrelator unterdrückt werden.

- Es ist keine Wartezeit für das Abklingen der Echos des kurzen Burstsignals, insbesondere des Einzelpulses notwendig.

- Störunterdrückung für den Fernbereich.

In weiterer vorteilhafter Ausgestaltung der Erfindung ist es zweckmäßig, wenn das zweite Ultraschallburstsignal eine größere Energie als das erste Ultraschallburstsignal aufweist und wenn das erste Ultraschallburstsignal zur Überwachung eines Nahbereichs des Umfelds der Einrichtung und das zweite Ultraschallburstsignal zur Überwachung eines an den Nahbereich angrenzenden Fernbereichs des Umfelds der Einrichtung genutzt wird.

Bei einer weiteren vorteilhaften Ausgestaltung der Erfindung kann vorgesehen sein, dass jedes Ultraschallburstsignal eine Folge von Ultraschallpulsen aufweist, wobei das erste Ultraschallburstsignal eine geringere Anzahl an Ultraschallpulsen aufweist als das zweite Ultraschallburstsignal. Hierbei ist es von Vorteil, wenn das erste Ultraschallburstsignal nicht kodiert ist und einen Einzel- bzw. x-fach-Ultraschallpuls mit x<10 aufweist.

In weiterer vorteilhafter Ausgestaltung der Erfindung ist zweckmäßigerweise vorgesehen, dass das zeitlich frühere erste Ultraschallburstsignal im Falle einer Überreichweite, wodurch sein Reflexionssignal von dem Ultraschallwandler in der Empfangsphase des zeitlich späteren zweiten Messintervalls des betreffenden Messintervallpaares empfangen wird, mit dem Reflexionssignal des zweiten Ultraschallburstsignals nicht oder im Wesentlichen nicht korreliert.

Bei einer weiteren Alternative des erfindungsgemäßen Verfahrens ist vorgesehen, dass die Messintervalle Gruppen von Messintervallen gemäß dem zeitlich späteren zweiten Messintervall eines besagten Messintervallpaares umfassen, wobei zwischen den einzelnen Gruppen von zweiten Messintervallen mindestens ein Messintervall gemäß dem zeitlich früheren ersten Messintervall eines besagten Messintervallpaares liegt und wobei die Gruppen eine gleiche oder eine unterschiedliche Anzahl von zweiten Messintervallen umfassen.

Schließlich kann bei einer weiteren Alternative der Erfindung vorgesehen sein, dass die Messintervalle Gruppen von Messintervallen gemäß dem zeitlich früheren ersten Messintervall eines besagten Messintervallpaares umfassen, wobei zwischen den einzelnen Gruppen von ersten Messintervallen mindestens ein Messintervall gemäß dem zeitlich späteren zweiten Messintervall eines besagten Messintervallpaares liegt und wobei die Gruppen eine gleiche oder eine ungleiche Anzahl von ersten Messintervallen umfassen.

Ein weiterer Aspekt der Erfindung bezieht sich darauf, eine optimale dopplerunempfindliche Erkennung von Reflexionen bei gleichzeitigem möglichst kleinem Mindestabstand für ein noch zu erkennendes Objekt zu ermöglichen, wobei dies durch Lösung des Problems der Nichtkorrelation bei gleichzeitiger Dopplerrobustheit erfolgen soll.

Im Rahmen der Entstehung der Erfindung wurde erkannt, dass es sinnvoll ist, in Abhängigkeit vom geschätzten Abstand des zu messenden Objekts nicht nur unterschiedliche Kodes oder, anders gesagt, unterschiedliche Ultraschallburstsignale zu verwenden, sondern im Nahbereich einen kurzen, ersten Ultraschallburst und im Fernbereich einen langen, zweiten Ultraschallburst zu verwenden. Für eine sichere Detektion weit entfernter Hindernisse ist es nämlich sinnvoll, einen möglichst energiereichen Ultraschallburst (als z. B. zweiten Ultraschallburst) auszusenden, um damit die Energie im Reflektionssignal zu maximieren. Da die Sendeleistung im Allgemeinen nicht beliebig gesteigert werden kann, ist eine Erhöhung der Energie eines Ultraschallbursts nur über eine Verlängerung des Ultraschallbursts zu erreichen. Eine Verringerung der Energie eines Ultraschallbursts ist analog über eine Verkürzung des (ersten) Ultraschallbursts zu erreichen. Durch eine angepasste Filterung hebt sich das empfangene Signal des zweiten Ultraschallbursts optimal aus dem Rauschuntergrund ab. Durch den langen zweiten Ultraschallbust kann sich allerdings eine entsprechend verschlechterte Ortsauflösung des reflektierten Signals des zweiten Ultraschallbursts ergeben. Dieser Nachteil kann unter Verwendung einer geeigneten Kodierung des zweiten Ultraschallbursts (Poly-Phasen-Kode oder P4-Kode mit jeweils einer Phasensprungweite von kleiner als 90°) und der Durchführung einer entsprechenden Korrelation im Empfänger überwunden werden. Ein weiteres Problem ergibt sich eventuell dadurch, dass ein langer zweiter Ultraschallburst den Blindbereich für die Vermessung mit diesem zweiten Ultraschallburst, wie oben bereits erwähnt, verlängert. Dadurch können Objekte im Nahbereich mit Hilfe einer Vermessung durch einen solchen zweiten Ultraschallburst nicht mehr erkannt werden.

Daher wird bei einer Variante der Erfindung der bereits zuvor erwähnte erste Ultraschallburst als weiterer Typ eines Ultraschallsignals verwendet, der sich quasi orthogonal bezüglich der Vermessung mit Hilfe des zweiten Ultraschallbursts verhält. Im Rahmen der Erfindung wurde diese Anforderung als vorteilhaft erkannt. Ebenso wurde erkannt, dass diese Forderung gleichbedeutend ist mit einer Energiereduktion für diesen ersten Ultraschallburst. Diese Energiereduktion kann auf zwei Arten simultan erfolgen: Zum einen kann der erste Ultraschallburst in seinem Energieinhalt reduziert werden. Dies geschieht am einfachsten durch Verkürzung. Zum anderen reduziert sich die Amplitude der Reflektionen mit fortschreitender Zeit nach Aussendung des ersten Ultraschallbursts.

Für die Überwachung des Nahbereichs kann ein solcher erster Ultraschallburst daher im Extremfall nur ein einzelner Ultraschallpuls sein und trotzdem gute Ergebnisse liefern. Die Erfahrung hat gezeigt, dass einer oder einige wenige aufeinanderfolgende Ultraschallpulse für einen Ultraschallburst zur Erkennung von Objekten im Nahbereich besonders vorteilhaft sind. Ganz besonders vorteilhaft sind ca. vier Ultraschallpulse.

Im Sinne der Erfindung können im Übrigen Ultraschallbursts unterschiedlicher Länge bereits als Ultraschallbursts unterschiedlicher Kodierung verstanden werden, die beispielsweise mit unterschiedlichen Sende-Kodes durch Multiplikation moduliert sind. Dabei wäre z. B. der eine Kode für den längeren Ultraschallburst etwas länger auf eins gesetzt als der Kode für den kürzeren Ultraschallburst.

Werden die beiden verschiedenen Ultraschallbursts schnell hintereinander gesendet, so kann, wie bereits beschrieben, ein großes Hindernis in weiter Entfernung zu einer Überreichweite des kurzen ersten Ultraschallbursts für die Vermessung von Objekten im Nahbereich führen. Das bedeutet, dass der reflektierte längere zweite Ultraschallburst durch die Überreichweite des kürzeren ersten Ultraschallbursts gestört würde. Die Kodierung des längeren zweiten Ultraschallbursts unterdrückt jedoch solche Überreichweiten durch Vergrößerung des Störabstandes. Durch die Kürze des ersten Ultraschallburst gepaart mit der ohnehin eintretenden Schwächung infolge der größeren Entfernung werden somit die Überreichweiten durch diese drei Maßnahmen unterdrückt. Die beiden Kodes verhalten sich daher quasi orthogonal zueinander. Die Erfindung erreicht somit ein nicht vorhersehbares Ergebnis in Form eines geeigneten technischen Kompromisses. Dies gilt nur für Überreichweiten des kurzen ersten Ultraschallbursts. Dies gilt nicht für Überreichweiten des längeren zweiten Ultraschallbursts. Nach dem längeren zweiten Ultraschallburst muss daher ausreichend lange gewartet werden, um ein Abklingen der Welle sicherzustellen und Überreichweiten des langen zweiten Ultraschallbursts in den Messbereich des kurzen ersten Ultraschallbursts hinein sicher auszuschließen.

Die Erfindung wird im Folgenden anhand eines Ausführungsbeispiels und mit Hilfe der Fign. 1 bis 9 erläutert. Die Fign. zeigen:

Fig. 1 beispielhafte Signale, die im Folgenden erläutert werden,

Fig. 2 ein Beispiel für ein Doppelecho beim Barker-Kode (der erfindungsgemäß nicht eingesetzt wird),

Fig. 3 die Korrelationsfunktion in Abhängigkeit von der Bewegungsgeschwindigkeit des Objekts im Falle des Barker-Kodes (als Beispiel für einen erfindungsgemäß nicht zu verwendeten Kode),

Fig. 4 die Korrelationsfunktion in Abhängigkeit von der Bewegungsgeschwindigkeit des Objekts im Falle des P4-Kodes,

Fig. 5 die Korrelationsfunktion in Abhängigkeit von der Bewegungsgeschwindigkeit des Objekts im Falle des P4-Kodes mit zusätzlichen Rauschunterdrückungsmaßnahmen,

Fig. 6 ein Empfängerausgangssignal bei einem sehr kleinen Objektabstand und bei Verwendung eines kurzen ersten Ultraschallbursts,

Fig. 7 ein Empfängerausgangssignal bei einem größeren Objektabstand und bei Verwendung eines kurzen ersten Ultraschallbursts,

Fig. 8 ein Empfängerausgangssignal ohne Objekt und bei Verwendung eines kurzen ersten Ultraschallbursts und eines P4-Kodes für den langen zweiten Ultraschallburst in Kombination,

Fig. 9 ein Korrelationssignal mit größerem Objektabstand und bei Verwendung eines kurzen ersten Ultraschallbursts und eines P4-Kodes für den zweiten Ultraschallburst in Kombination.

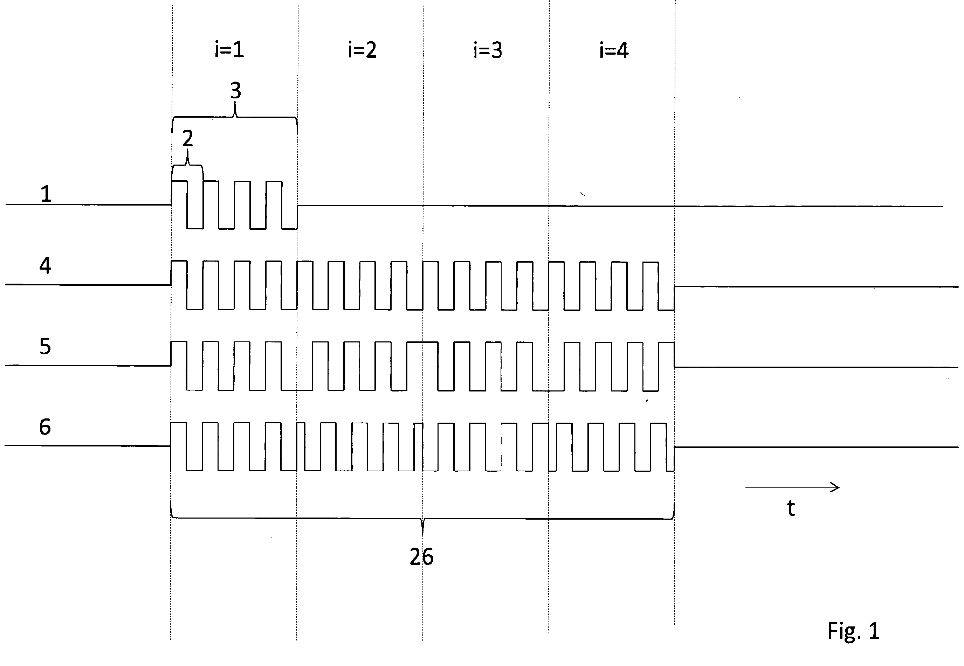

Zunächst wird auf Fig. 1 eingegangen. Für die weitere Diskussion sei festgelegt, dass ein Ultraschallburst 26 aus einer oder mehreren Pulssequenzen 3 bestehen kann. Jede Pulssequenz 3 besteht dabei aus einem oder mehreren Ultraschallpulsen 2.

Es hat sich als besonders vorteilhaft erwiesen, wenn die Modulation eines längeren Ultraschallbursts 4,5,6 als Phasenmodulation 5, 6 erfolgt. Durch Messungen wurde ermittelt, dass vier Ultraschallpulse 2 in einer Pulssequenz 3 eines Ultraschallbursts 26 besonders vorteilhaft sind. Am Ende einer solchen Pulssequenz 3 wird die Phase der Transducer-Schwingung geändert. In Fig. 1 stellt das Sendesignal 1 einen kurzen ersten Ultraschallburst aus vier solchen Ultraschallpulsen 2 in einer einzigen Pulssequenz 3 dar. Die Phasenmodulation kann beispielsweise als Bi-Phasen-Kode, also als ein Kode mit nur zwei erlaubten Phasenlagen erfolgen. Diese sind typischerweise um 180° zueinander verschieden. Ein solcher Kode ist der Barker-Kode.

Ein beispielhafter Barker-Kode setzt sich wie folgt zusammen:

$$\Theta_i = \frac{\pi}{N-1}(i-1)^2 - \pi(i-1)\left(1-\frac{1}{N-1}\right) \text{ mit i=1, 2, ....N}$$

Dieser Phasen-Adder wird der Phase eines Basissendesignals hinzuaddiert. Hierbei gibt i die jeweilige Nummer der aufeinanderfolgenden Pulssequenzen 3 eines Ultraschallbursts 26 an. Diese Kodierung entspricht dem als Signal 5 des in Fig. 1 dargestellten Signals mit N=4.

Der Barker-Kode hat den Nachteil, dass schon bei einer geringen Bewegungsgeschwindigkeit des Objekts, Doppel- und Mehrfachechos auftreten können. Nicht alle Kodes sind also aufgrund der in der Realität auftretenden Dopplerverschiebung für den Praxiseinsatz geeignet.

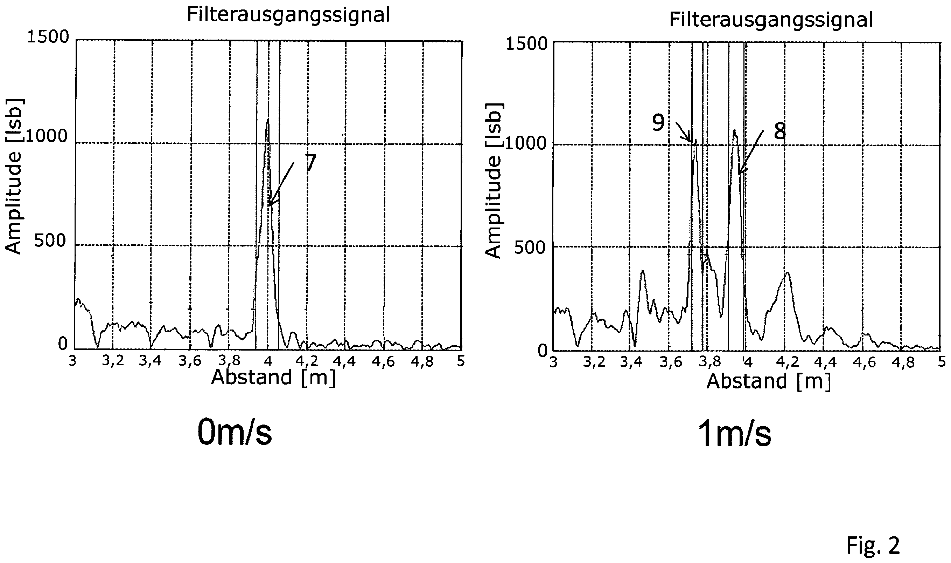

Fig. 2 zeigt dieses Problem der Bi-Phasen-Kodes am Beispiel eben dieses Barker-Kodes. Die linke Hälfte in Fig. 2 zeigt dabei das Korrelationssignal bei einer Objektgeschwindigkeit von 0m/s und die rechte Hälfte der Fig. 2 bei einer Objektgeschwindigkeit von 1m/s.

Bei einer Objektgeschwindigkeit 1m/s zeigt ein solches beispielhaftes Ultraschallmesssystem offensichtlich bereits zwei Echos 8, 9 statt einem Echo 7.

Der Modulationssprung um 180° hat noch einen weiteren wesentlichen Nachteil: Durch die gegenläufige Ansteuerung des Transducers wird dieser quasi gebremst und liefert zunächst Energie in die Sendestufe zurück. Es wird also weniger Energie abgestrahlt. Dieses Problem ist umso signifikanter, je öfter die Phase gewechselt wird. Somit hätte die Nutzung von Bi-Phase-Kodes den Nachteil, dass sich die Reichweite bestenfalls nicht in dem Maße vergrößert, wie dies durch die Nutzung eines Kodes beabsichtigt ist.

Eine wesentlich bessere Energieabstrahlung kann mit einem Quadriphasen-Kode erreicht werden. Bei diesem springt die Phase bei einem Phasenwechsel um 90°. Hierdurch wird der Transducer bei einem Phasenwechsel nicht abgebremst. Die nicht phasengerechte Energie verliert der Transducer durch Abstrahlung der Schallenergie.

Dies kann durch Verwendung von Poly-Phasen-Kodes oder Mehrphasen-Kodes, deren Phasensprungweite kleiner als 90° ist, noch weiter verbessert werden. Ein besonders geschwindigkeitsrobuster Kode ist der P4-Kode. Dieser erzeugt bei einer Dopplerverschiebung zwar einen gewissen Messfehler, die Autokorrelationsfunktion ist aber in weiten Teilen einem Dirac-Puls ähnlich.

Ein dementsprechender P4-Kode kann durch die Formel

$$\Theta_i = \frac{\pi}{N}(2i-1)^2 - \frac{\pi}{2}(2i-1) \text{ mit i=1, 2, } \quad N$$

beschrieben werden. Ein beispielhafter Kode mit N=4 ist in Fig. 1 als Signal 6 dargestellt. Der P4-Kode erzwingt somit nur Sprünge um +/-90° dies dämpft den Transducer weniger. Besonders wichtig ist es, dass die Autokorrelationsfunktion jedoch gegenüber der zuvor erwähnten Bi-Phasen-Modulation unverändert bleibt.

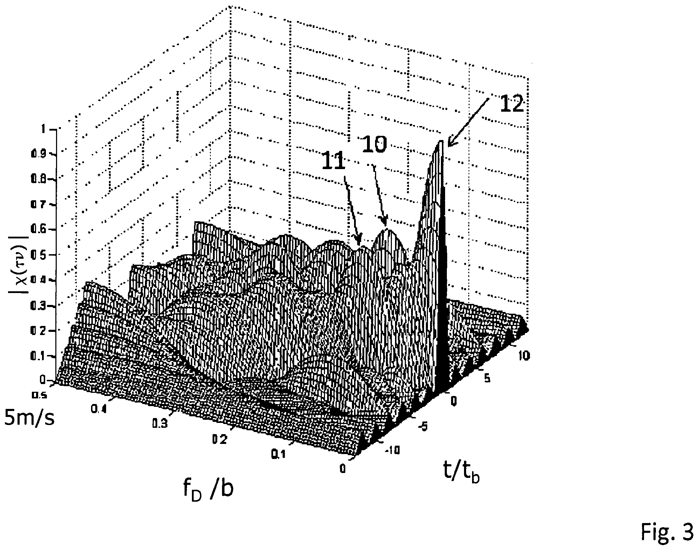

Fig. 3 zeigt eine besondere Darstellung der Autokorrelationsfunktion. Hierbei stellt $f_D$/b die Dopplerverschiebung dividiert durch die Bandbreite dar. Die Skala t/$t_b$ stellt zeigt die Autokorrelation normiert auf die Breite einer Pulssequenz 3 dividiert durch die Länge des Ultraschallbursts 26 dar. Die Amplitude ist mit $\chi$ bezeichnet. Ohne Dopplerverschiebung ergibt sich eine eindeutige Zuordnung der Signalverzögerung über einen Spike (Dirac-Puls 12). Tritt nun eine Dopplerverschiebung auf, so treten zunächst die mit den beiden Pfeilen versehenen Höcker 10, 11 auf. Bei noch größerer Dopplerverschiebung wird das Ergebnis mehr oder weniger beliebig und uneindeutig.

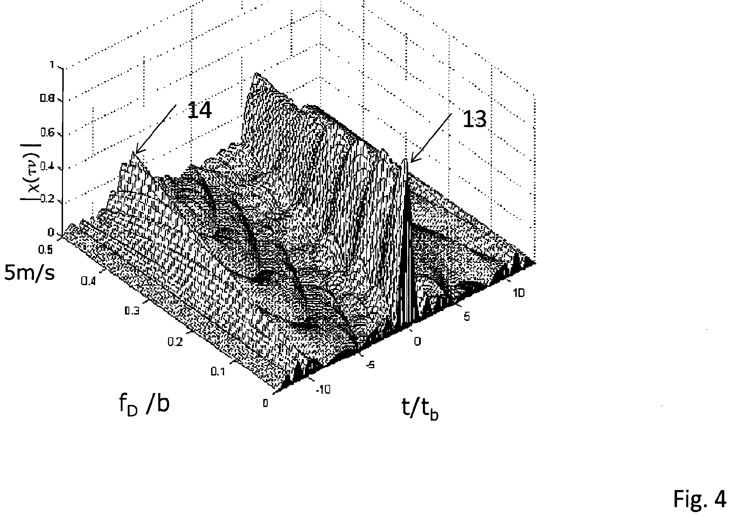

Im Gegensatz dazu zeigt Fig. 4 die gleiche Funktion für einen P4-Kode. Die Funktion zeigt im Wesentlichen nur eine mehr oder weniger stabile Ausprägung 13 des Dirac-Pulses. Allerdings hat auch diese Kodierung ihre Grenzen. Ab einem bestimmten Punkt, können die parasitären Elemente 14 nicht mehr vernachlässigt werden. Daher ist der Bereich der erlaubten Dopplerverschiebungen auch hier begrenzt.

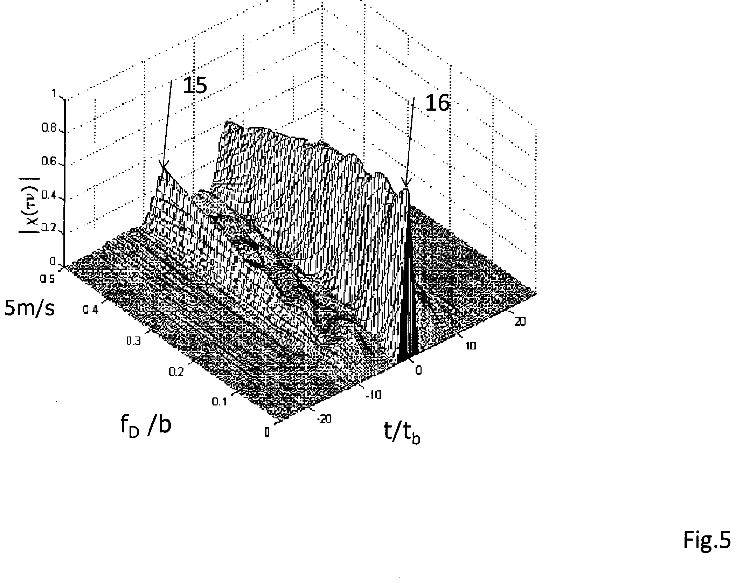

Fig. 5 zeigt, wie diese Funktion aussehen kann, wenn durch weitere Maßnahmen das Rauschen der Korrelationsfunktion unterdrückt wird. Der Korrelationspeak 16 ist hier stark ausgeprägt. Auch diese Methode hat Ihre Grenze bei zu großer Dopplerverschiebung durch Störungen 15. Somit kann hinsichtlich der Phasenkodierung des Ultraschallsendebursts zusammengefasst werden, dass eine P4 Kodierung besonders vorteilhaft ist. Im Nahbereich ist dieser P4 Kode, wie oben bereits ausgeführt aber nachteilig.

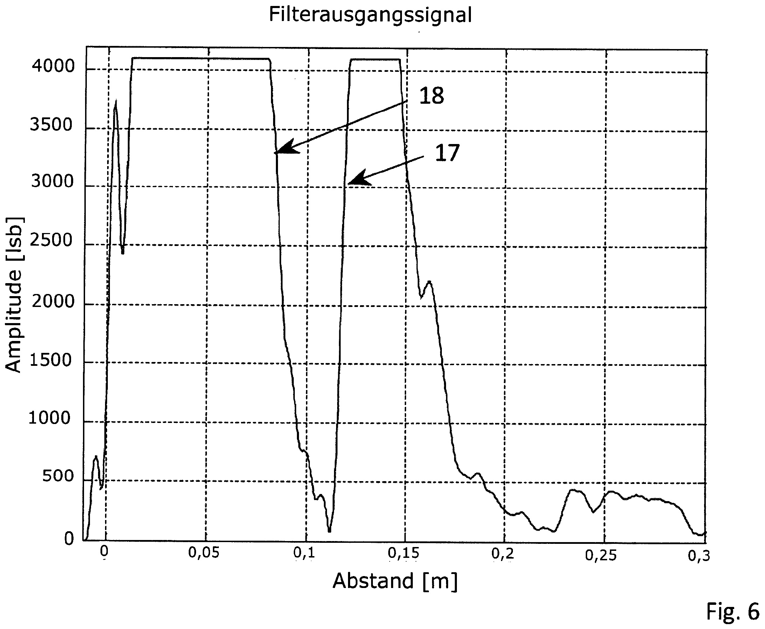

Fig. 6 zeigt das Empfängerausgangssignal für einen kurzen ersten Ultraschallburst (Bezugzeichen 1 in Fig. 1). Im Folgenden wird dieses Verfahren Einzelpulsverfahren genannt. Es hat sich allerdings gezeigt, dass es optimal ist, die kurzen ersten Ultraschallbursts aus ca. 4 Ultraschallpulsen wie in Fig. 1 zusammenzusetzen. In dem Beispiel dauert der Ultraschallburst 18 bis zu einer Zeit, die einem Abstand von 0,1m aufgrund der Schallgeschwindigkeit entspricht.

Dann trifft die Reflektion 17 auf den Empfänger. Es ist offensichtlich, dass die kurze Aussendezeit diesen kurzen Minimalabstand von hier beispielhaft 11cm überhaupt erst ermöglicht.

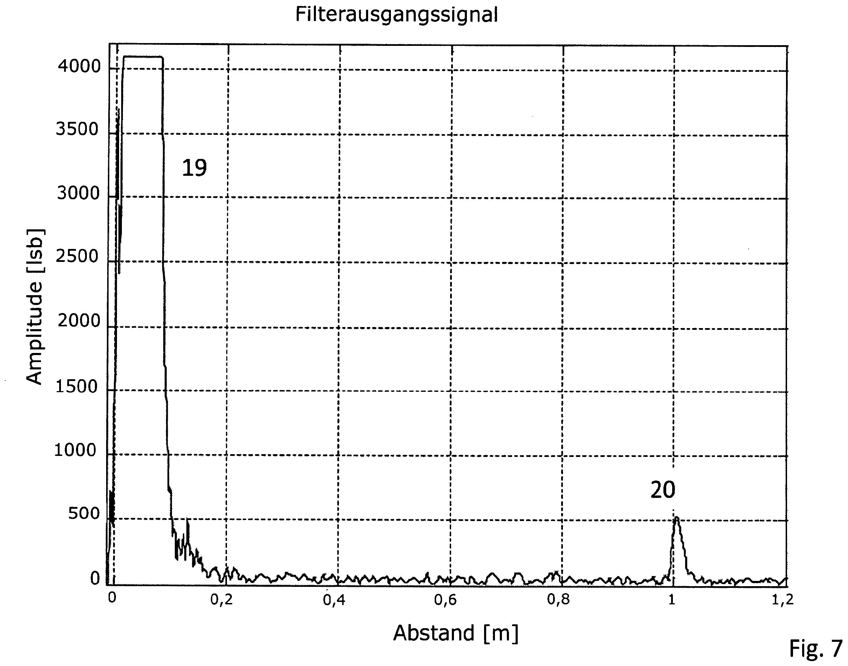

Fig. 7 zeigt das beispielhafte Empfängerausgangssignal für ein Plastikrohr in einer Entfernung von einem Meter (siehe bei 20). Die Amplitudenabnahme gegenüber dem Signal in Fig. 5 ist offensichtlich.

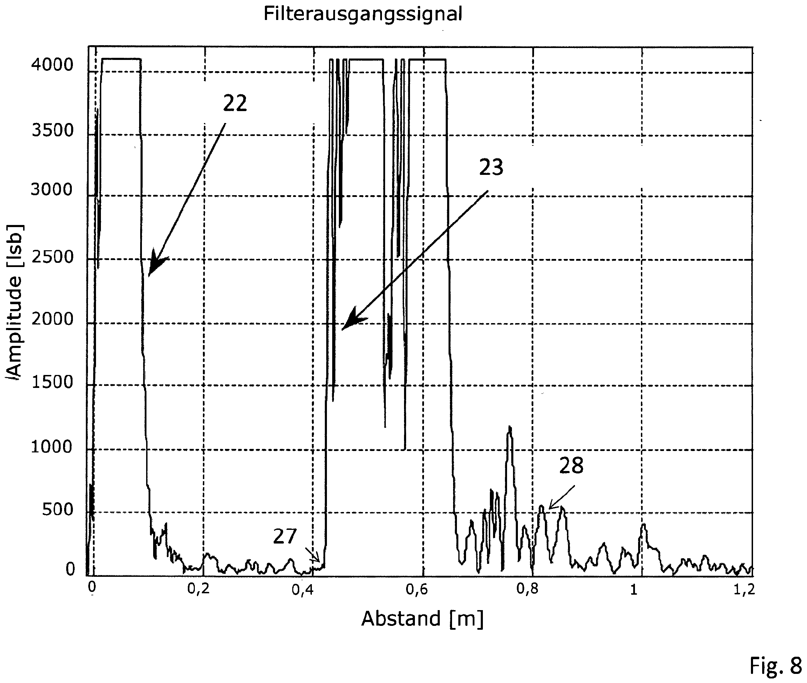

Zu Fig. 8: In einem kombinierten Verfahren werden ein kurzer erster Ultraschallburst 22 gefolgt von einem langen, P4-kodiertem zweiten Ultraschallburst 23 gesendet. Dies ist in Fig. 8 dargestellt.

Sowohl der kurze erste Ultraschallburst 22, wie auch der lange, kodierte zweite Ultraschallburst 23 werden in dem jeweiligen Zeitbereich durch Korrelation verarbeitet. Der Zeitbereich des kurzen ersten Ultraschallbursts 22 geht bis zur Nahtstelle 27, dem ersten Maximalabstand, bezogen auf den Aussendezeitpunkt des kurzen ersten Ultraschallbursts. Der Zeitbereich des langen, kodierten zweiten Ultraschallbursts 23 von der Nahtstelle 28, dem ersten Minimalabstand, diesmal bis zur Maximalreichweite des Systems bezogen auf den Aussendezeitpunkt des langen zweiten Ultraschallbursts.

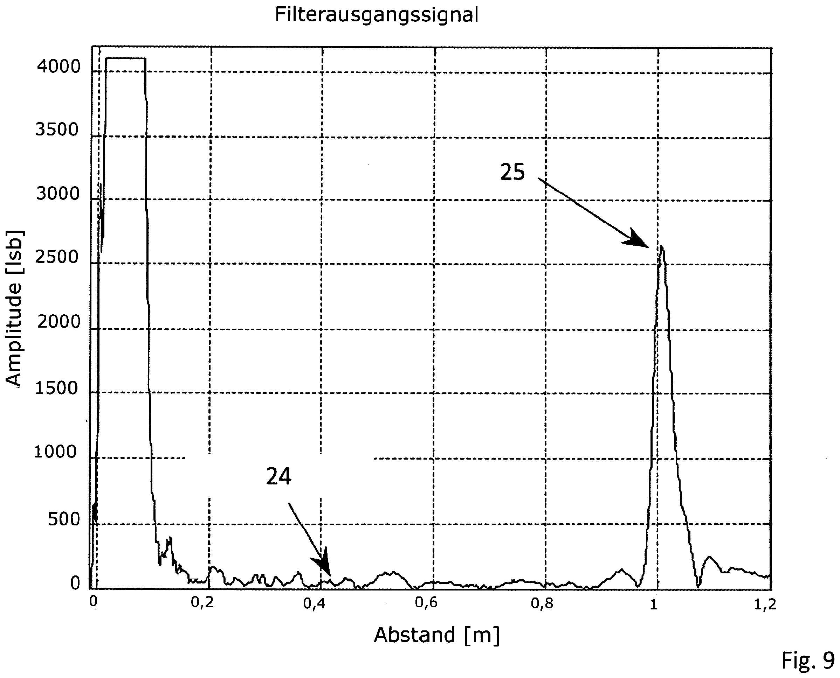

Fig. 9 zeigt eine beispielhafte sich daraus ergebende kombinierte Korrelationsfunktion. Das beispielhafte Hindernis 25 befindet sich dabei in 1m Entfernung. Die Nahtstellen 27, 28 aus Fig. 8 werden dabei durch die Auswertung auf eine gemeinsame Nahtstelle 24 abgebildet.

## Patentansprüche

**1.** Verfahren zur gemeinsamen Überwachung des Nah- und des Fernbereichs des Umfelds einer sich insbesondere bewegenden Einrichtung, z.B. eines Fahrzeugs, mittels Ultraschall hinsichtlich der Existenz von Objekten im Umfeld und/oder von in das Umfeld gelangenden Objekten, wobei bei dem Verfahren

- innerhalb einzelner zeitlich aufeinanderfolgender Messintervalle von einem Ultraschallwandler in einer Sendephase eines Messintervalls zunächst ein Ultraschallburstsignal ausgesendet wird und der Ultraschallwandler nach einer Ausschwingphase des Messintervalls für die Dauer einer Empfangsphase des Messintervalls eine mögliche Reflektion eines zuvor ausgesendeten Ultraschallburstsignals empfangen kann,
- wobei die Messintervalle solche Paare von zeitlich aufeinanderfolgenden Messintervallen umfassen, bei denen unterschiedliche Ultraschallburstsignale, nämlich ein erstes Ultraschallburstsignal in dem zeitlich früheren ersten Messintervall und ein im Vergleich zum ersten Ultraschallburstsignal längeres zweites Ultraschallburstsignal in dem zeitlich späteren zweiten Messintervall des betreffenden Messintervallpaares verwendet werden,
- wobei das zweite Ultraschallburstsignal eine größere Energie als das erste Ultraschallburstsignal aufweist **dadurch gekennzeichnet, dass** das erste Ultraschallburstsignal zur Überwachung des Nahbereichs des Umfelds der Einrichtung bis zu einem vorgebbaren Abstandsschwellwert und das zweite Ultraschallburstsignal zur Überwachung des an den Nahbereich angrenzenden Fernbereichs des Umfelds der Einrichtung ab dem Abstandsschwellwert genutzt wird,
- wobei sich die beiden Ultraschallburstsignale ferner in Bezug auf Kodierungen unterscheiden, indem das erste Ultraschallburstsignal nicht kodiert ist und einen Einzel- bzw. x-fach-Ultraschallpuls mit x<10 aufweist, während das zweite Ultraschallburstsignal mittels eines Poly-Phasen-Kodes oder eines P4-Kodes kodiert ist, deren Phasensprungweite kleiner als 90° ist, und
- wobei die beiden Ultraschallburstsignale nicht bzw. im Wesentlichen nicht miteinander korreliert sind.

**2.** Verfahren nach Anspruch 1, **dadurch gekennzeichnet, dass** die Anzahl x von Ultraschallpulsen des ersten Ultraschallburstsignals kleiner als acht oder kleiner als sechs oder kleiner als vier ist.

**3.** Verfahren nach Anspruch 1 oder 2, **dadurch gekennzeichnet, dass** jedes Ultraschallburstsignal eine Folge von n Ultraschallpulsen mit n ≥ 1 aufweist, wobei das erste Ultraschallburstsignal eine geringere Anzahl an Ultraschallpulsen aufweist als das zweite Ultraschallburstsignal.

**4.** Verfahren nach einem der Ansprüche 1 bis 3, **dadurch gekennzeichnet, dass** das zeitlich frühere erste Ultraschallburstsignal im Falle einer Überreichweite, wodurch sein Reflexionssignal von dem Ultraschallwandler in der Empfangsphase des zeitlich späteren zweiten Messintervalls des betreffenden Messintervallpaares empfangen wird, mit dem Reflexionssignal des zweiten Ultraschallburstsignals nicht oder im Wesentlichen nicht korreliert.

**5.** Verfahren nach einem der Ansprüche 1 bis 4, **dadurch gekennzeichnet, dass** die Messintervalle Gruppen von Messintervallen gemäß dem zeitlich späteren zweiten Messintervall eines besagten Messintervallpaares umfassen, wobei zwischen den einzelnen Gruppen von zweiten Messintervallen mindestens ein Messintervall gemäß dem zeitlich früheren ersten Messintervall eines besagten Messintervallpaares liegt und wobei die Gruppen eine gleiche oder eine unterschiedliche Anzahl von zweiten Messintervallen umfassen.

**6.** Verfahren nach einem der Ansprüche 1 bis 4, **dadurch gekennzeichnet, dass** die Messintervalle Gruppen von Messintervallen gemäß dem zeitlich früheren ersten Messintervall eines besagten Messintervallpaares umfassen, wobei zwischen den einzelnen Gruppen von ersten Messintervallen mindestens ein Messintervall gemäß dem zeitlich späteren zweiten Messintervall eines besagten Messintervallpaares liegt und wobei die Gruppen eine gleiche oder eine ungleiche Anzahl von ersten Messintervallen umfassen.

## Claims

**1.** Method for commonly monitoring the near and far range of the surroundings of a device, in particular a device in motion, e.g. a vehicle, using ultrasound, for the existence of objects in the surroundings and/or of objects entering the surroundings, wherein in the method

- within individual chronologically successive measuring intervals, an ultrasound transducer can first transmit an ultrasound burst signal in a transmission phase of a measuring interval and the ultrasound transducer receive a possible reflection of a previously transmitted ultrasound burst signal for the duration of a receive phase after a decay phase of the measuring interval,
- wherein the measuring intervals comprise such pairs of chronologically successive measuring intervals in which different ultrasound burst signals, namely a first ultrasound burst signal in the chronologically earlier first measuring interval and a second ultrasound burst signal which is longer compared to the first ultrasound burst signal, are used in the chronologically later second measuring interval of the respective pair of measuring intervals,
- wherein the second ultrasound burst signal has a larger energy than the first ultrasound burst signal,

**characterized in that**

- the first ultrasound burst signal is used for monitoring the near range of the surroundings of the device up to a predeterminable distance threshold value and the second ultrasound burst signal is used for monitoring the far range of the surroundings of the device from the distance threshold value, said far range adjoining said near range,
- wherein the two ultrasound burst signals further differ with respect to codings **in that** the first ultrasound burst signal is not encoded and comprises a single or x-times ultrasound pulse where x<10, whereas the second ultrasound burst signal is encoded using a poly-phase code or a P4 code, whose phase skip wave is smaller than 90°, and
- wherein the two ultrasound burst signals are not or substantially not correlated with each other.

2. Method according to claim 1, **characterized in that** the number x of ultrasound pulses of the first ultrasound burst signal is less than eight or less than six or less than four.

3. Method according to claim 1 or 2, **characterized in that** each ultrasound burst signal comprises a sequence of n ultrasound pulses where $n \geq 1$, the first ultrasound burst signal comprising a lesser number of ultrasound pulses than the second ultrasound burst signal.

4. Method according to one of claims 1 to 3, **characterized in that** the chronologically earlier first ultrasound burst signal does not or substantially not correlate with the reflection signal of the ultrasound burst signal in case of an overreach due to which its reflection signal is received by the ultrasound transducer in the receive phase of the chronologically later second measuring interval of the respective pair of measuring intervals.

5. Method according to one of claims 1 to 4, **characterized in that** the measuring intervals comprise groups of measuring intervals corresponding to the chronologically later second measuring interval of a respective pair of measuring intervals, wherein at least one measuring interval corresponding to the chronologically earlier first measuring interval of a respective pair of measuring intervals lies between the individual groups of second measuring intervals, and wherein the groups each comprise the same or a different number of second measuring intervals.

6. Method according to one of claims 1 to 4, **characterized in that** the measuring intervals comprise groups of measuring intervals corresponding to the chronologically earlier first measuring interval of a respective pair of measuring intervals, wherein at least one measuring interval corresponding to the chronologically later second measuring interval of a respective pair of measuring intervals lies between the individual groups of first measuring intervals, and wherein the groups each comprise the same or a different number of first measuring intervals.

**Revendications**

1. Procédé de contrôle simultané des zones proche et distante de l'environnement d'un dispositif particulièrement en mouvement, par exemple d'un véhicule, au moyen d'ultrasons en ce qui concerne l'existence d'objets dans l'environnement et/ou d'objets arrivant dans l'environnement, dans lequel au cours du procédé

- à l'intérieur d'intervalles de mesure individuels chronologiquement consécutifs un signal ultrasonore en rafale est d'abord émis depuis un transducteur ultrasonore pendant une phase d'émission d'un intervalle de mesure et le transducteur ultrasonore peut, après une phase d'oscillation de l'intervalle de mesure, recevoir une réflexion possible du signal ultrasonore en rafale précédemment émis pour la durée d'une phase de réception de l'intervalle de mesure,

- dans lequel les intervalles de mesure comprennent de telles paires d'intervalles de mesure chronologiquement consécutifs, lors desquelles sont utilisés différents signaux ultrasonores en rafale, à savoir un premier signal ultrasonore en rafale dans le premier intervalle de mesure chronologiquement antérieur et un deuxième signal ultrasonore en rafale plus long comparé au premier signal ultrasonore en rafale dans le deuxième intervalle de mesure chronologiquement postérieur de la paire d'intervalles de mesure concernée,

- dans lequel le deuxième signal ultrasonore en rafale comporte une énergie supérieure au premier signal ultrasonore en rafale,

- **caractérisé en ce que** le premier signal ultrasonore en rafale est utilisé pour le contrôle de la zone proche de l'environnement du dispositif jusqu'à une valeur seuil de distance pouvant être prédéfinie et le deuxième signal ultrasonore en rafale est utilisé pour le contrôle de la zone distante de l'environnement du dispositif à partir de la valeur seuil de distance,

- dans lequel les deux signaux ultrasonores en rafale diffèrent en outre au regard des encodages, le premier signal ultrasonore en rafale n'étant pas encodé et comportant une impulsion ultrasonore simple ou répétée x fois avec x<10 alors que le deuxième signal ultrasonore en rafale est encodé au moyen d'un code polyphasé ou d'un code P4, dont la largeur de saut de phase est inférieure à 90°, et

- dans lequel les deux signaux ultrasonores en rafale ne sont pas corrélés l'un à l'autre ou ne sont pas sensiblement corrélés l'un à l'autre.

2. Procédé selon la revendication 1, **caractérisé en ce que** le nombre x d'impulsions ultrasonores du premier signal ultrasonore en rafale est inférieur à huit ou inférieur à six ou inférieur à quatre.

3. Procédé selon la revendication 1 ou 2, **caractérisé en ce que** chaque signal ultrasonore en rafale comporte une suite de n impulsions ultrasonores avec n>1, dans lequel le premier signal ultrasonore en rafale comporte un nombre d'impulsions ultrasonores moins élevé que le deuxième signal ultrasonore en rafale.

4. Procédé selon l'une des revendications 1 à 3, **caractérisé en ce que** le premier signal ultrasonore en rafale chronologiquement antérieur n'est pas corrélé ou sensiblement pas corrélé avec le signal réfléchi du deuxième signal ultrasonore en rafale dans le cas d'une portée excessive, où son signal réfléchi est reçu par le transducteur ultrasonore dans la phase de réception du deuxième intervalle de mesure chronologiquement postérieur de la paire d'intervalles de mesure concernée.

5. Procédé selon l'une des revendications 1 à 4, **caractérisé en ce que** les intervalles de mesure comprennent des groupes d'intervalles de mesure selon le deuxième intervalle de mesure chronologiquement postérieur d'une des dites paires d'intervalles de mesure, dans lequel au moins un intervalle de mesure selon le premier intervalle de mesure chronologiquement antérieur d'une des dites paires d'intervalles de mesure se trouve entre les groupes individuels de deuxièmes intervalles de mesure et dans lequel les groupes comprennent un nombre identique ou différent de deuxièmes intervalles de mesure.

6. Procédé selon l'une des revendications 1 à 4, **caractérisé en ce que** les intervalles de mesure comprennent des groupes d'intervalles de mesure selon le premier intervalle de mesure chronologiquement antérieur d'une des dites paires d'intervalles de mesure, dans lequel au moins un intervalle de mesure selon le deuxième intervalle de mesure chronologiquement postérieur d'une des dites paires d'intervalles de mesure se trouve entre les groupes individuels de premiers intervalles de mesure et dans lequel les groupes comprennent un nombre identique ou inégal de premiers intervalles de mesure.

Fig. 1

EP 2 994 774 B1

Filterausgangssignal

Filterausgangssignal

0m/s

1m/s

Fig. 2

EP 2 994 774 B1

Fig. 3

Fig. 4

Fig.5

EP 2 994 774 B1

Filterausgangssignal

Fig. 6

EP 2 994 774 B1

Fig. 7

Filterausgangssignal

Fig. 8

EP 2 994 774 B1

Filterausgangssignal

EP 2 994 774 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010033210 A
- DE 102011110170 A
- DE 102010033383 A
- US 20090135672 A